Europäisches Patentamt

European Patent Office

Office européen des brevets

(19)

(11) Publication number: **0 084 950**
**A2**

# EUROPEAN PATENT APPLICATION

(12)

(21) Application number: 83300256.1

(22) Date of filing: 19.01.83

(51) Int. Cl.³: **H 04 N 5/92**

(30) Priority: **19.01.82 GB 8201504**

(43) Date of publication of application: **03.08.83**
**Bulletin 83/31**

(84) Designated Contracting States: **CH DE FR GB IT LI NL**

(71) Applicant: **UNIVERSITY COLLEGE LONDON, Gower Street, London WC1E 6BT (GB)**

(72) Inventor: **Clark, David Rayner, Hartlands 100 Crouch Hill, London, N.8. (GB)**
Inventor: **Rumball, David Arthur Leonard, 22, Chalkdell Path Hitchin, Hertfordshire, SG5 2LG (GB)**

(74) Representative: **Fentiman, Denis Richard et al, Elkington and Fife High Holborn House 52/54 High Holborn, London WC1V 6SH (GB)**

(54) **Data storage system using video tape.**

(57) A method is provided for recording data on a video tape recorder (504) which comprises the steps of:

(a) Feeding incoming data into a buffer store (200),

(b) Transferring a file of data from the buffer store (200) on to a stripe of a video tape mounted on the video recorder (504),

(c) Repeating steps (a) and (b) until a block of files has been recorded on a plurality of stripes contained in a length of tape, adjacent recorded stripes being separated from one another by unrecorded stripes if the rate at which the data is fed to the store is less than the maximum rate at which data can be recorded,

(d) Where steps (a) to (c) leave unrecorded stripes in the said length of tape, repeating steps (a) to (c) to record data on previously unrecorded stripes, and

(e) Repeating steps (a) to (d) on successive lengths of tape.

An apparatus for carrying out this recording and for reading the recorded data is also disclosed.

The method and apparatus are applicable, inter alia, to receiving image data received from satellites.

ACTORUM AG

Data Storage System Using Video Tape

This invention relates to the storage of data using a video tape as a recording medium. One particular application of the invention is to the storage of images, for example images derived from a satellite receiving station such as that possessed by a weather satellite. However, the invention is applicable quite generally to the storage of data, as will become apparent from the following description.

One problem with recording data received from a typical satellite receiving station is that there is a wide variation in the rate at which data is received. A video tape is an appropriate medium for recording such data, but the variable rate at which the data is received gives rise to considerable problems both in recording the data and subsequently in playing the tape back. It is an object of an aspect of this invention to enable data received at a variable rate to be recorded on a video recorder which is unmodified or substantially unmodified, the recorded tape being capable of being played back on any other video recorder of the same general type as that on which the recording was made.

According to the invention there is provided a method of recording data on a video tape recorder which comprises:

(a) Feeding incoming data into a buffer store,

(b) Transferring a file of data from the buffer store on to a stripe of a video tape mounted in the video recorder;

(c) Repeating steps (a) and (b) until a block of files has been recorded on a plurality of stripes contained in a length of tape, adjacent recorded stripes being separated from one another by unrecorded stripes if the rate at which the data is fed to the store is less than the maximum rate at which data can be recorded,

(d)     Where steps (a) to (c) leave unrecorded stripes in the said length of tape, repeating steps (a) to (c) to record data on previously unrecorded stripes, and

(e)     Repeating steps (a) to (d) on successive lengths of tape.

In the accompanying drawings:

Figure 1 shows diagrammatically a length of video tape;

Figure 2 is a block diagram illustrating two forms of apparatus which may be used to carry out the method of the present invention;

Figure 3 shows in more detail a buffer store which forms part of Figure 2;

Figure 4 (formed by Figures 4A and 4B) shows in more detail a microprocessor unit which forms part of Figure 2;

Figure 5 (formed by Figures 5A and 5B) shows in more detail a host interface which forms part of Figure 2;

Figure 6 (formed by Figures 6A to 6C) shows in more detail a video cassette recorder interface which forms part of Figure 2;

Figure 7a illustrates a known form in which data can be recorded;

Figure 7b illustrates a form in which data is preferably recorded according to one aspect of the invention, and

Figure 8 is a state diagram showing re-synchronization of data read out of the video cassette recorder.

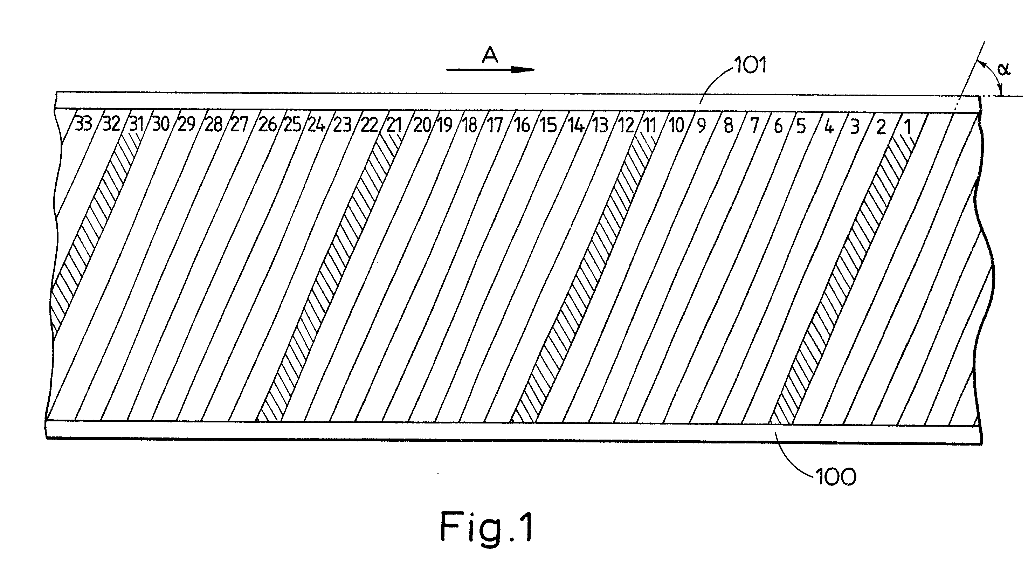

Referring first to Figure 1, this shows in diagrammatic form a length of video tape.   Figure 1 shows a plurality of oblique stripes, which are numbered for ease of subsequent reference, which represent the pattern in which recording is carried out.   The stripes are shown extending at an angle α to the length of the tape, but it must be understood that in practice the angle α would be very much smaller than is illustrated. Also, the stripes would be very much narrower in relation to the width of the tape than is shown. The tape moves in the direction of the arrow A around a rotating recording head. It should be noted that in conventional recording of an image by a video recorder each stripe carries one field, i.e. one half of a picture made up of, say 625 lines. However, in a typical use of the present invention to record data representing an image many stripes carry the information which goes to make up the image; in a typical case there can be 2500 stripes per image.

The way in which data is recorded on the tape shown in Figure 1 is as follows. Incoming data which is to be recorded on the tape is temporarily stored in a buffer store, as described in more detail below. When the buffer store contains sufficient data this is recorded on the tape in the form of a stripe, and this is indicated by the shading in Figure 1 on the stripe which has been given the reference numeral 1. The tape is pre-formatted before use with blank stripes at the start of each of which is a header identifying the stripe. The tape moves continuously, and if the rate at which data is entering the buffer store is less than the rate at which it could be recorded on the tape there will then follow a number of stripes during which data will be stored in the buffer store but none will be fed from the buffer store to be recorded on the tape. In the example illustrated in Figure 1 the incoming data rate is one tenth of the maximum possible so that the recorded stripe 1 is followed by unrecorded stripes 2 to 10 inclusive. There is then once again sufficient data in the buffer store and this is transferred to the next stripe 11. This procedure continues down the tape with one stripe in every ten being recorded. This process continues until a given length of tape has passed beneath the recording head. For example, on a tape lasting 60 minutes this procedure of recording one stripe in ten might be allowed to continue until the tape has been running for, say 6 minutes. The tape is then rewound until the start of the recorded length of tape is located. This is done by means of information recorded on a time code track 100. The first unrecorded stripe (i.e. the stripe with reference numeral 2) is then located by reading the headers on the stripes, and the above described process is then repeated recording stripes 2, 12, 22, 32 and so forth down the predetermined length of tape. The process is then repeated a further eight times until all the stripes in the length of tape have been recorded. This length of tape is referred to below as a block. Once one block has been recorded in this fashion the tape moves on to a second block which is then similarly recorded. In the numerical example given above the tape could consist of 10 blocks of 6 minutes each. However, it should be noted that there is no necessity for the blocks to be of equal length to one another, and the tape could consist of a number of blocks of varying lengths. Furthermore, there is no need to keep to the same recording rate in each block. In the example given above the first block is recorded at a rate of one stripe in every ten, but this rate could be different in subsequent blocks.

For simplicity, the above example has used the case where the maximum recording rate is an integral number of times the incoming data rate. Of course, this will not normally be the case. If, for example, the maximum recording rate were 10.5 times the incoming data rate, the video recorder would alternately record one stripe in 10 and one stripe in 11 in a given block. After ten passes through the block there would be some unrecorded stripes which could not be used (one in every 21), but the non-use of such a small proportion of the tape does not matter. Even this degree of non-use is much higher than one would normally expect in operation of the invention.

Figure 1 also shows a control track 101 which serves to hold rotation of the head and tape travel in synchronism with one another.

It will be appreciated that the recording technique just described makes it possible to record data on a video tape at a high density without having to alter the rate at which the tape travels. It should further be noted, however, that this does not affect copying of a tape. If a tape is to be copied this can be done while the tape is travelling continuously from one end to the other at normal speed so that information which might have taken six hundred minutes to record will only take sixty minutes to copy.

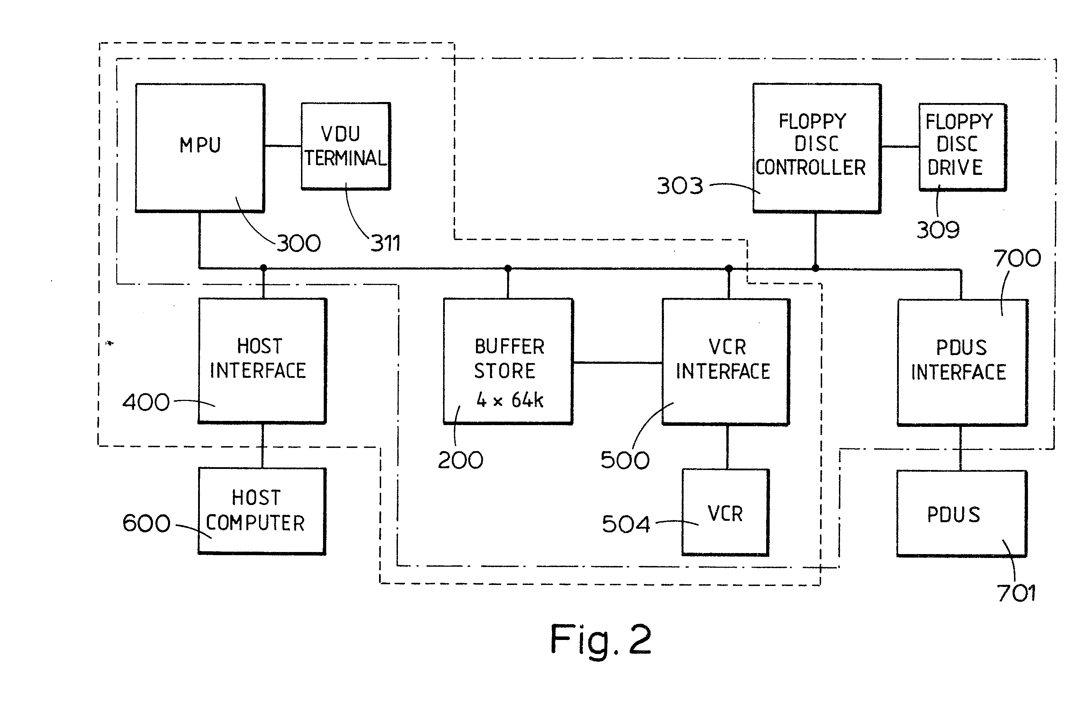

Attention is now directed to Figure 2 which is a block diagram showing two forms of system with which the present invention can be carried out. The dashed lines enclose the components present in what is referred to below as the first form and the chain dotted lines enclose what is referred to below as the second form.

The first form is designed to act as a computer peripheral with a host computer 600. In this form the data to be stored is transferred to a video cassette recorder (VCR) 504 from the host computer 600. This is achieved by means of a host interface 400 of appropriate design. The exact design of the host interface will depend on the particular host computer being used. Data is transferred under the control of an eight bit microprocessor unit (MPU) 300. The MPU 300 receives and interprets commands, controls the motion and modes of the VCR 504, shifts data between the host interface 400 and a buffer store 200, and is used in off-line fault diagnoses. The MPU has a terminal 311 which may be provided with a visual display unit (VDU) to assist the operator of the MPU in the second form, and for diagnostic checking and repair in both forms. Data which is derived from the host computer 600 and is to be recorded by the VCR 504 is temporarily stored in the buffer store 200. As described below, this may, for example, be a 4 x 64K quad port RAM. Data is transferred from the buffer store 200 to the VCR 504 by means of a VCR interface 500. The VCR interface 500 operates under the control of the MPU 300 to control the motion and modes of the VCR 504, format data to and from the buffer store 200 into a standard video signal suitable for recording directly on the VCR 504, and read and write block identification information on the time code track 100 (see Figure 1).

The VCR itself can be a standard unmodified video cassette recorder, and in one particular embodiment which has been tested experimentally may be a Sony BVU 200 P recorder.

The second form shown in Figure 2 is designed to operate in conjunction with a satellite receiving station 701, for example digital data received from the weather satellite station known as METEOSAT by a PDUS (PDUS is an acronym for Primary Data User Station). Data from the PDUS 701 is interfaced by an appropriate PDUS interface 700 and can then be treated substantially in the same way as data in the first form. However, because one no longer has a host computer to hold some of the software required it is necessary to add to the system a floppy disc drive 309 and a floppy disc interface 303 and also provide an extra 8K RAM in the microprocessor unit 300.

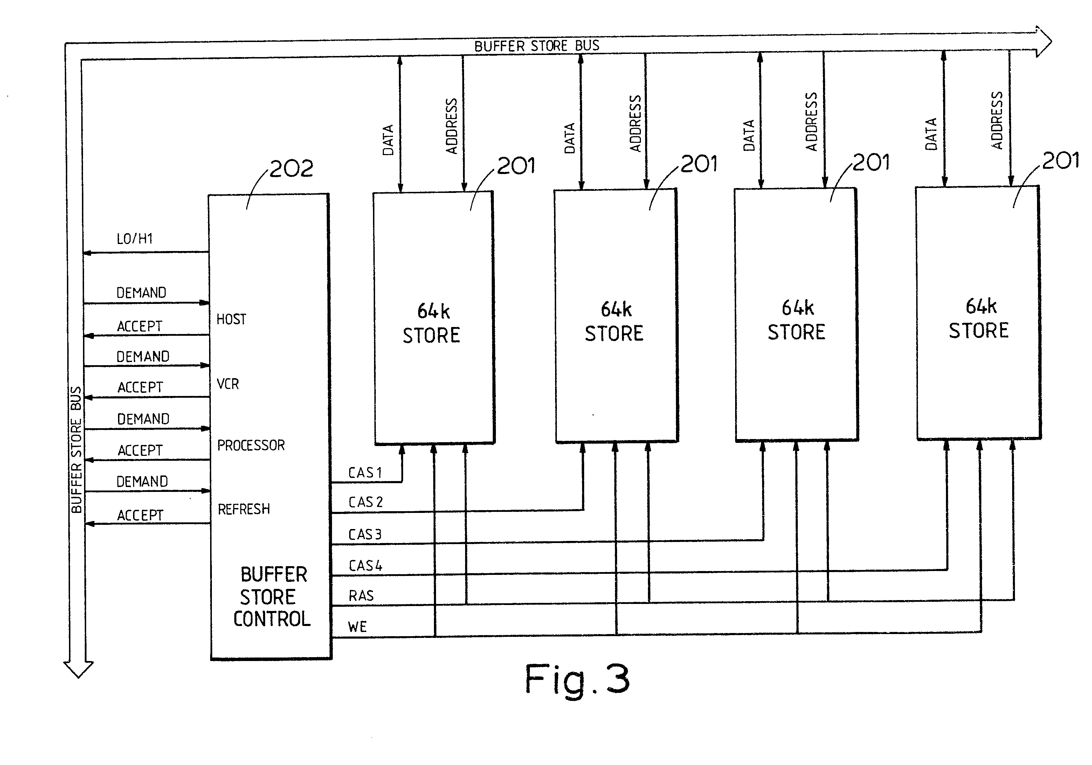

Figure 3 shows the buffer store 200 in more detail. The buffer store 200 comprises four identical 64K stores 201, each of which comprises eight 64K x 1 bit dynamic RAMS. The buffer store further comprises a buffer store control 202. The buffer store 200 is multiported, that is to say, any of four different devices may access the store at any one time. These devices are the VCR interface 500, the refresh controller for the dynamic RAMS (not shown), the microprocessor unit 300 and the host interface 400. Each of these is assigned a different priority, such that in the event of two or more devices trying to access the store at the same time the device with the highest priority is serviced first. The priority order is in accordance with the list given above, i.e. the VCR interface 500 has the highest priority and the host interface 400 has the lowest priority. The buffer store control 202 generates the control signals for the stores 201, these being the column and row strobe signals CAS and RAS and the write enable signal WE. Selection between the four stores is achieved, as can be seen from Figure 3, via the CAS line on which respective signals CAS1, CAS2, CAS3 and CAS4 appear to identify the store 201 concerned. The stores 201 are addressed by a 16-bit address which is split into low and high bytes (theCAS and RAS signals respectively ) of 8 bits each, which are multiplexed to form the complete address. The LO/HI signal indicates which half of the 16 bit address is on the 8-bit buffer store bus.

In addition to generating the control signals for the stores 201 the buffer store control 202 also performs the aribtration between the RAM access requests sent to the store. A RAM cycle is started by a demand, and an accept signal from the buffer store control 202 signals that valid data is on the buffer store bus.

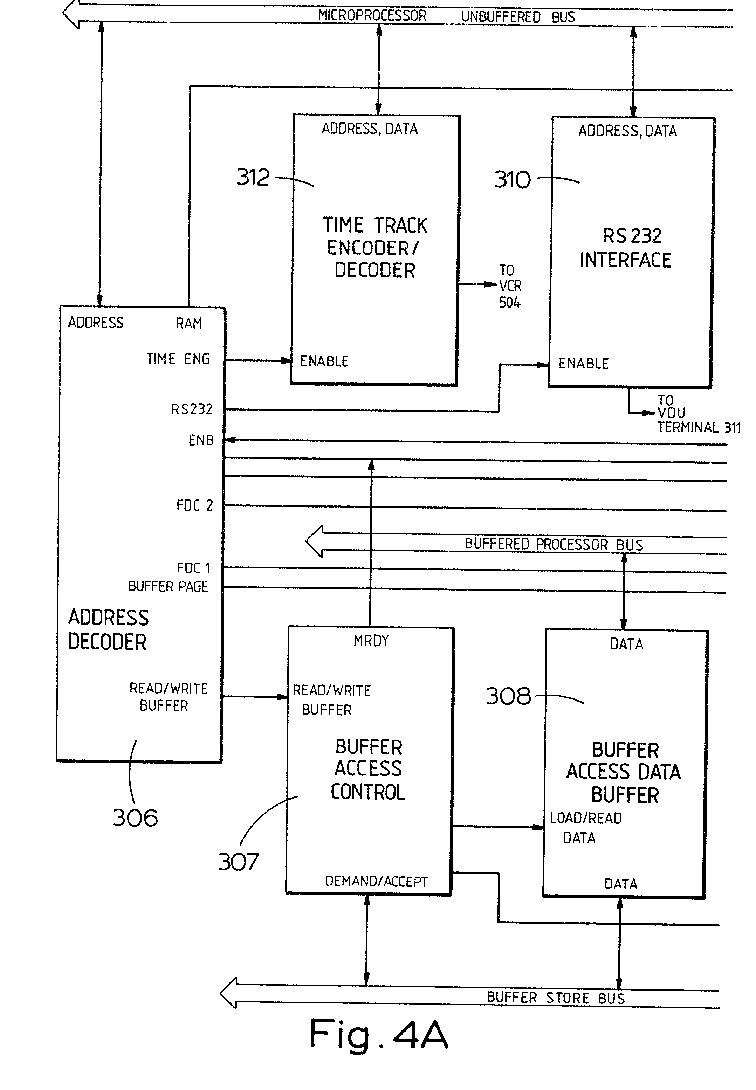

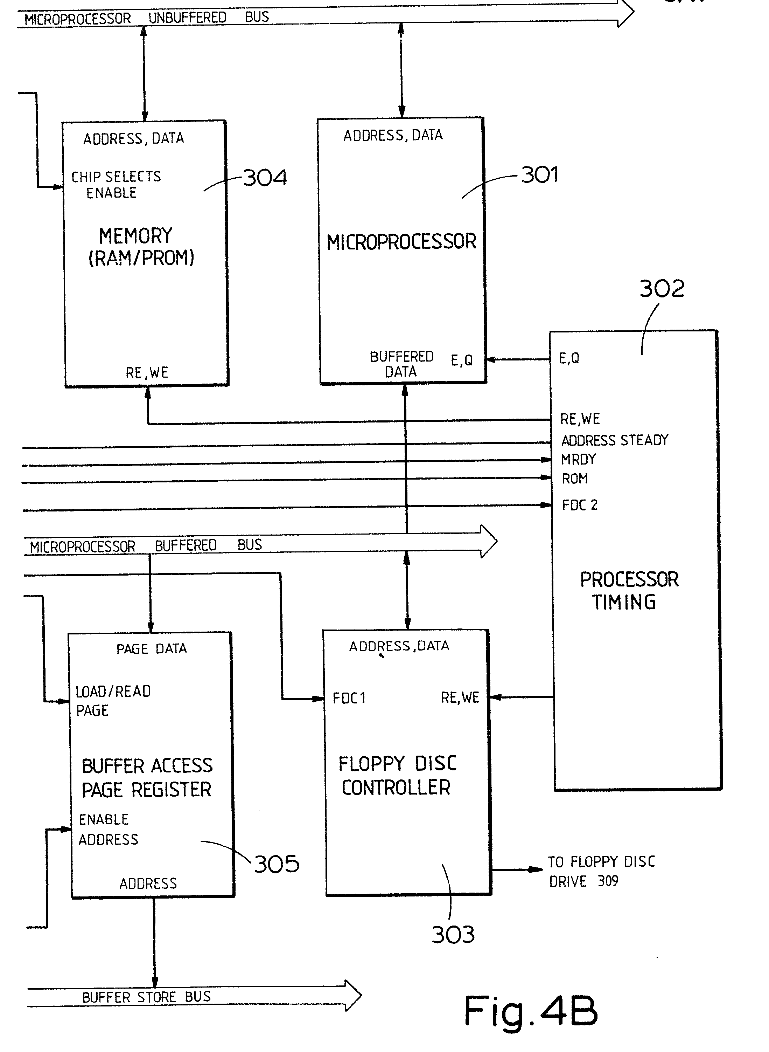

Figure 4 shows the microprocessor unit 300. The supervision and coordination of the various parts of the whole apparatus are performed by the microprocessor unit.

The microprocessor unit comprises a microprocessor 301 which may, for example, be a Motorola 68B09E. Included within the block indicated by reference numeral 301 are not only the microprocessor itself but also buffers for buffering the 16-bit address bus and the 8-but data bus. Timing for the microprocessor unit 300 is provided by a timing section 302. The timing section 302 generates the main timing clocks (E,Q) for the microprocessor 301, the RE and WE strobes for the floppy disc controller 303 (referred to below in more detail) and the RE and WE strobes for the memory 304 (see below) for the microprocessor 301). The timing section 302 receives signals MRDY (when the buffer memory is being used) ROM (when the PROM of memory 304 is being used) and FDC 2 (when the floppy disc controller 303 is being used. This is to enable the timing section 302 to allow for the relative slowness of these circuits in providing timing of the microprocessor 301. The timing unit also issues an enable signal ENB to the address decoder 302 to indicate when the address supplied to the decoder is steady and therefore suitable to be decoded. The timing unit 302 also generates an 8 MHZ clock which is used as the basic timing reference for the system.

The microprocessor memory 304 comprises four 2K byte static RAMS forming an 8K block of RAM, plus a 2K block of static RAM for use as a scratchpad. The RAM signal from the address decoder 306 selects the whole block of RAMS, and then further decoding selects a particular device. In addition to the RAMS the memory comprises two 2K byte EPROMS which together hold the monitor software which is run when the system is first switched on or reset. If the system is being run with a host computer the 8K block of RAM may be omitted, as mentioned above.

In order to map the 256K byte address range of the buffer store 200 onto the much smaller 64K address range of the microprocessor 301, a page mapping scheme is used. For this purpose, the microprocessor unit 300, the host interface 400 and the VCR interface 500 each has a page register which controls which segment of the buffer store 200 is to be used. Figure 4 shows the page register 305 for the microprocessor unit. The page register 305 forms a multiplexed 16 bits address, part formed by 11 bits from the microprocessor's address bus and part mapped through two PROMS which form part of the page register and which take 3 further bits of the microprocessor address and combine it with a page number stored in a page number store (also forming part of the page register) to give a five-bit output. The page number stored in the page number store can be read by the microprocessor. As can be seen in Figure 4 the page register 305 has an input for receiving page data from the buffered processor bus, an input connected to an address decoder 306 (see below) for enabling loading and reading of a page, an address output connected to the buffer store bus and an address enable input connected to a buffer access control 307 (see below).

Figure 4 also shows a buffer access data buffer 30· which forms a latch and buffer from the buffer store bus to the buffered microprocessor bus. The buffer 308 caters for the fact that the microprocessor unit may not be ready for data when it is read from the buffer store. The buffer access data buffer 308 is controlled by the buffer access control 307 which, as mentioned above, also controls the buffer access page register 305. If a buffer store RAM location is addressed by the microprocessor the buffer access control halts the microprocessor by putting an MRDY signal on the MRDY input to the processor timing thus halting the microprocessor and generates a buffer demand signal. On receiving a buffer accept signal from the buffer store control 202 the data is read or written from or to the buffer access data buffer 308 and the MRDY signal is negated.

As mentioned above, the microprocessing unit 300 includes a floppy disc controller 303 for controlling the floppy disc drive 309 (see Figure 2). It should be mentioned at this point that although the floppy disc controller 303 and floppy disc drive 309 are shown in Figure 2, for ease of illustration, as being separate from the microprocessor unit they are, logically, part of that unit. The floppy disc controller has an input FDC1 from the address decoder 306 and is connected by a buffered connection to the buffered processor bus. Preferably the floppy disc drive 309 has two drives, in which case the floppy disc drive controller has a decoder for determining which of the two possible drives is to be accessed.

Figure 4 also shows a standard RS 232 terminal interface 310 to provide an asynchronous communications interface with the VDU terminal 311. The interface is enabled by an enable signal received from the address decoder 306, and communicates with the unbuffered processor bus.

As explained above in connection with the description of Figure 1, information has to be recorded on a time code track 100 (see Figure 1) in order to locate the appropriate block of stripes during recording and replay. The recording of information on the time code track and the deciphering of recorded information during reading are controlled by a time code track encoder/decoder 312. In recording information on the time code track 100 data from the microprocessor is converted to an aynchronous data stream in the encoder/decoder and then phase encoded and low pass filtered before being sent to the time code track input of the VCR. In reading the time code track 100 the signal from the VCR time code track output is low pass filtered and an edge detector provides pulses off the signal. These pulses are decoded using a clock from a phase lock loop. The phase lock loop is used to compensate for the wide data rate variations of 10:1 between play and rewind and enables the signals recorded on the time code track 100 to be read in either direction despite this speed variation. The time code signals are standard ASCII digit sequences except that each is combined with its mirror image to give a sequence which reads identically in either direction. The microprocessor unit uses these signals to find the appropriate position on the tape. With a sixty minute tape search times are of the order of a few minutes.

The time track encoder/decoder is enabled by an enable signal from the address decoder 306. All of the address strobes used in the microprocessor control unit originate from the address decoder 306. This receives addresses from the unbuffered processor bus and enables whichever part of the microprocessor unit is to be addressed.

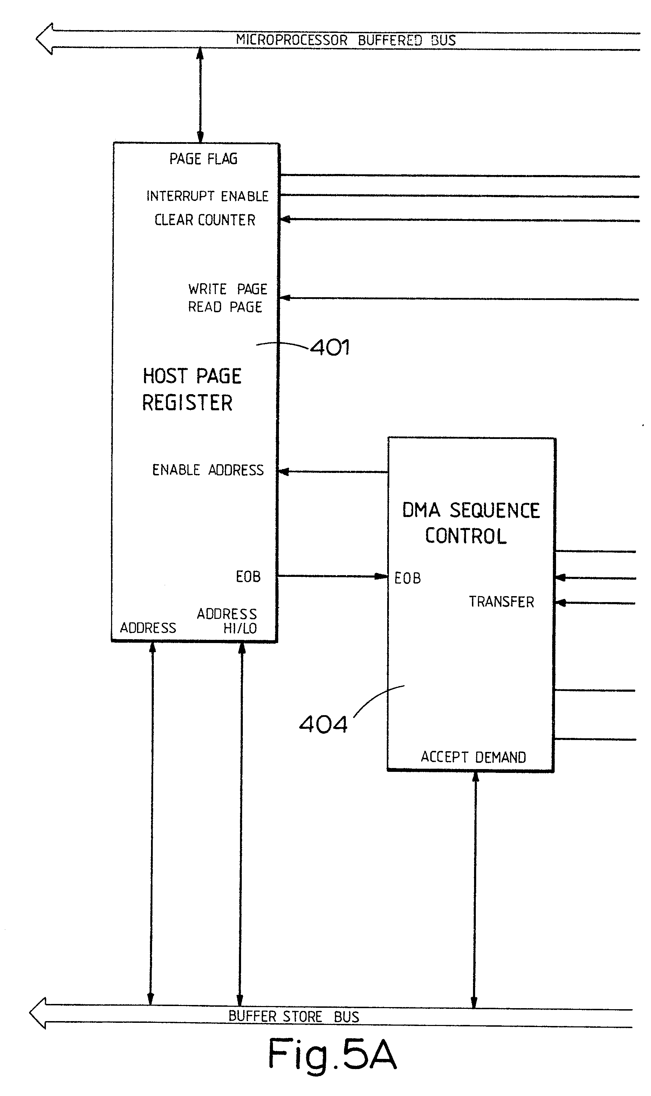

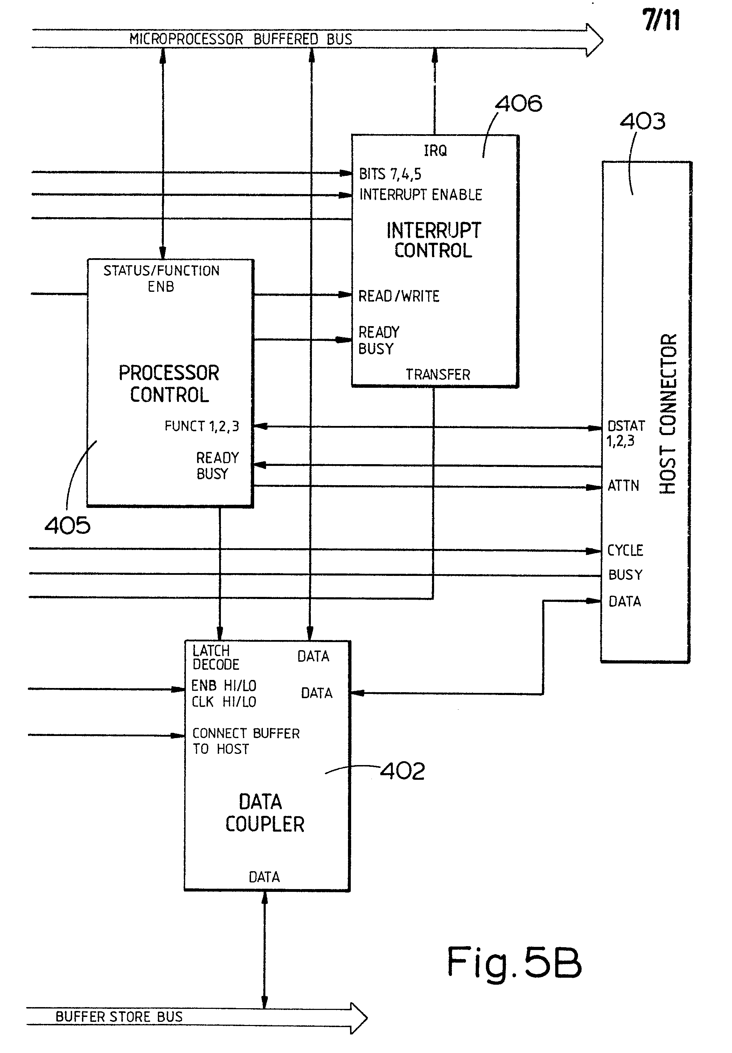

Figure 5 shows the host interface which contains the hardware necessary to transfer data and commands for the buffer store and the microprocessor to and from the host computer's own internal interface. In one embodiment of the invention the host computer is a VAX 11/780 of Digital Equipment Corporation and the internal interface is a DR11-B DMA (i.e. direct memory access) controller. Because of the high data rate involved a direct memory access system is used for data. However, commands and status words to and from the microprocessor are sent one byte at a time.

As shown in Figure 5, the host interface 400 comprises a host page register 401. This is similar to the page register 305 employed in the microprocessor. However, the page register 401 includes a binary counting chain clocked by each byte sent across the interface, This clocking generates a succession of 14-bit addresses, one for each byte, so that in this way the stream of data to and from the host computer is addressed in the buffer store. Eleven bits of this count are multiplexed directly whilst the other 3 bits are mapped through two PROMS forming part of the host page register which take these 3 bits and combine it with a page number stored in a page number store (also forming part of the page register) to give a 5-bit output. The page register 401 has an input/output connection with the microprocessor buffered bus and address and address HI/LO input/output connections with the buffer store bus. The other inputs and outputs to and from the page register 401 are described below with reference to other portions of the host interface.

Data is transferred to and from the host computer by a data coupler 402. The coupler 402 is connected to the host computer by a connector 403. The data coupler 402 also transfers commands and status words between the microprocessor buffered bus and the buffer store bus.

The host interface further comprises a DMA sequence control 404 which transmits and receives the specific handshaking signals for the DR11-B controller inside the host computer. These signals are CYCLE to request a transfer of data and BUSY to signal the end of the transfer. The DMA sequence control 404 also provides ENB HI/LO and CLK HI/LO signals which are used to multiplex/demultiplex the 16 bit data bus of the DR11-B controller onto the 8 bit buffer store bus. The DMA sequence control 404 also provides an ENABLE ADDRESS signal to the host page register 401 and has an ACCEPT/DEMAND connection with the buffer store bus by which the sequence control 404 demands and accepts control of the buffer store for the host computer interface. An EDB (End of Block) signal from the host page register 401 signifies the end of the DMA transfer.

The host interface further comprises a processor control 405. This control includes a register and buffer which together serve to interface the status and control lines of the DR11-B onto the microprocessor buffered bus. The processor control also includes a decoder for providing decoding for the byte data latches in the data coupler 402 and for the above-mentioned register/buffer. The FUNCT 1,2, 3 input to the processor control 405 receives 3-bit signals from the host connector 403 which can be decoded to eight commands. Similarly, the DSTAT 1,2,3 input to the host connector 403 receives 3-bit signals which can be decoded to eight status signals. Finally,the processor control includes means for synchronizing the READY and BUSY signals from the host computer with the above-mentioned 8 MHz clock to ensure that the set up time of a PROM in the interrupt control 406 (see below) is met.

The final element in the host interface is an interrupt control 406. This comprises the PROM mentioned above and a register which together form a state machine which controls the interrupt line IRQ to the microprocessor. This element decides which of several conditions (READY, BUSY, TRANSFER IN PROGRESS) will interrupt the microprocessor, as defined by bits 7,4,5 from register 401. The interrupt conditions are reset by write and read signals from the processor control 405. Additionally, the interrupt control 406 generates a transfer signal that informs the DMA sequence control 404 that DMA transfer is in progress. At the start of a DMA transfer the interrupt control 406 sets the binary counting chain in page register to zero by means of a CLEAR COUNTER signal, so that addressing by the page register starts from zero during each transfer.

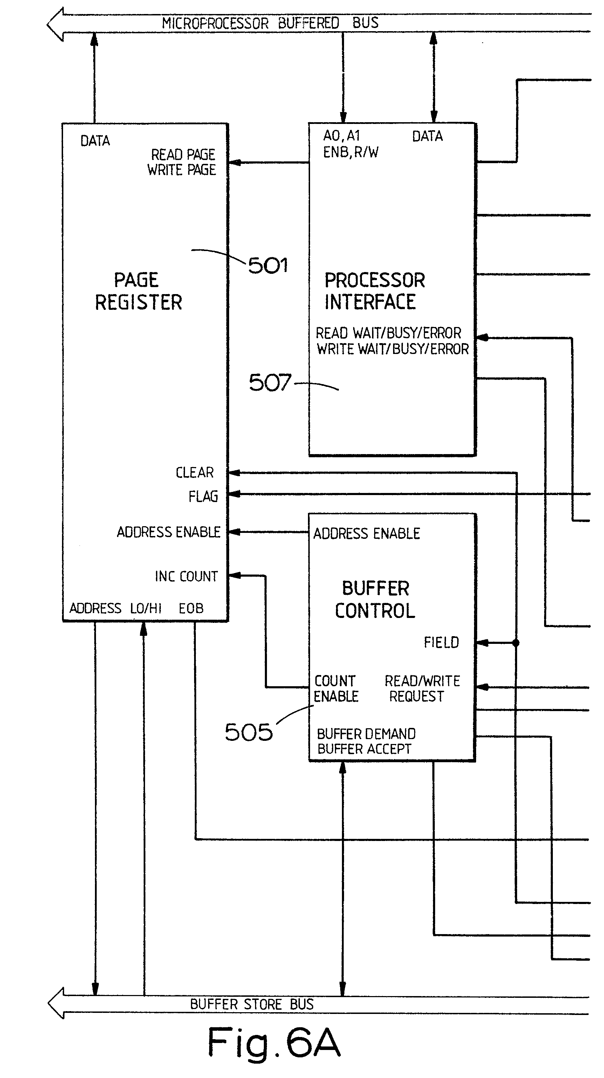

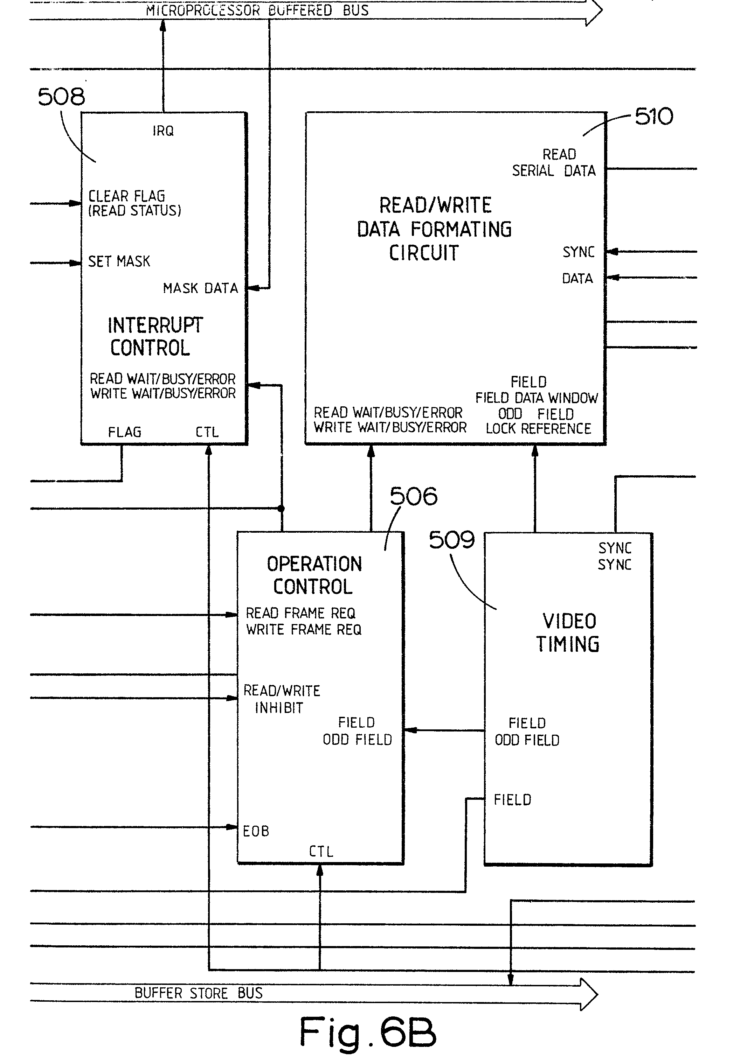

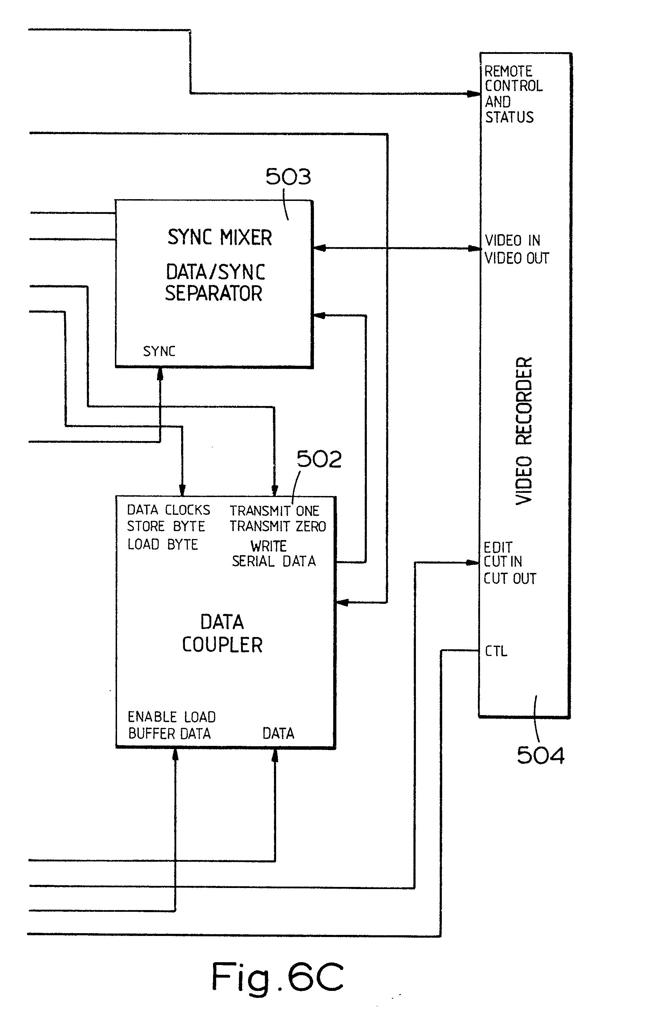

Figure 6 shows the VCR interface 500. This formats the data from the buffer store into a video signal, recovers data from a video signal for sending to the buffer store, and controls the mode and motion of the VCR via its remote control socket. It should be noted that all the connections to the VCR are via the standard sockets which are already present in the VCR, so that no modification of the VCR is necessary for this purpose. The transfer of data and control of the VCR are performed by commands from the microprocessor 300. A feature of the VCR interface, which is described in more detail below, is that reading and writing to and from the VCR may be queued, that is to say, more than one request or command for data may be made at any one time and the hardware will ensure that the commands are acted on strictly in the order that they were given. It should also be mentioned at this point that recording is done with the VCR in a playback mode, data being recorded, on those stripes which are to be recorded, by insert editing.

The VCR interface comprises a VCR page register 501 which performs the function of mapping data to and from the buffer store. The circuit of the page register 501 is substantially identical to that of the page register 401 with which the host interface is provided, and no further description of the page register 501 will therefore be given.

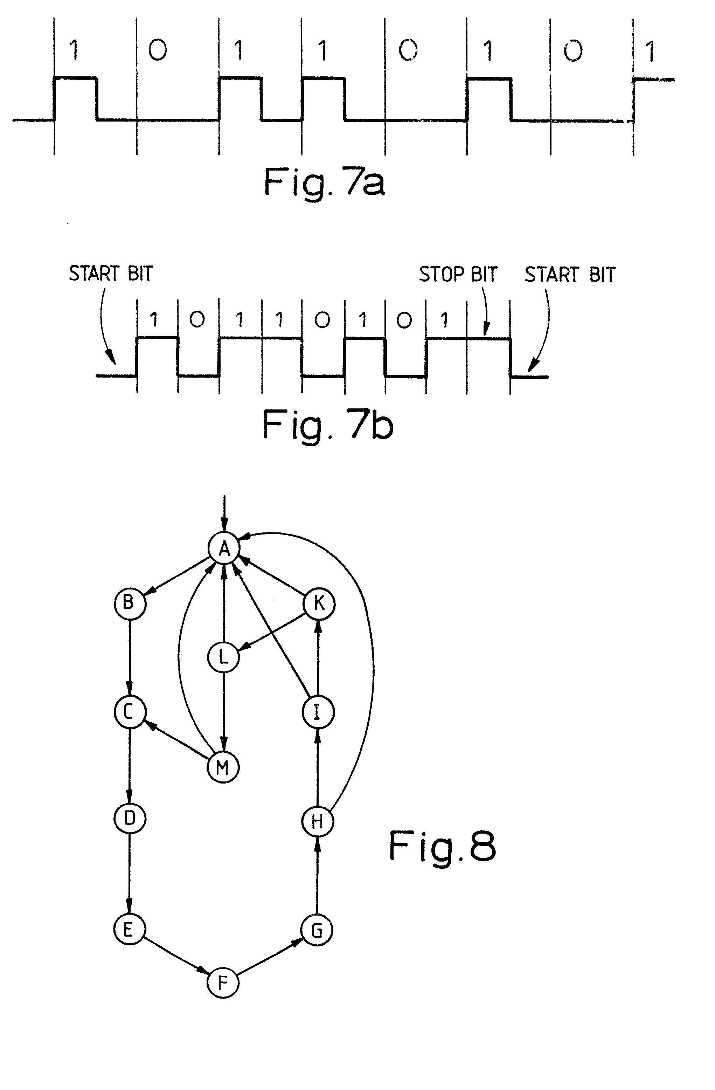

The VCR interface 500 further comprises a data coupler 502 and a circuit 503 which acts as a sync mixer and data/sync separator. The circuit 503 is described in more detail below. The data coupler 502 performs the parallel-to-serial conversion of the data received from the buffer store for sending via the circuit 503 to the VCR 504. The data coupler 502 also performs the serial-to-parallel conversion of data received from the circuit 503, via a data formatting circuit 510 (see below), for sending to the buffer store. It will be noted that the data coupler 502 has an input labelled TRANSMIT ONE/TRANSMIT ZERO which can be used to clamp the serial data out at a high or low level to provide start and stop bits and blanking. The way in which start and stop bits are used is described further below with reference to Figure 7.

A buffer control 505 controls the DEMAND/ACCEPT handshaking with the buffer store. Demands are generated following READ and WRITE requests from an operation control 506 (see below). The buffer control also has an ADDRESS ENABLE output to the page register 501 which enables an address to be put on the buffer store data bus by the page register, a COUNT ENABLE output to the page register which increments by one the count held by a counter in the page register, the counter providing the above-mentioned addresses, and a FIELD input from the video timing 509 which clears the counter chain at the start of each field.

A processor interface 507 serves to interface the microprocessor and the VCR 504. The processor interface comprises latches and buffers which hold and decode commands from the microprocessor (the two bits AO,A1 and the signals R/W (read/write) and ENB (enable) are used for decoding) and transmit the decoded commands, for example PLAY, REWIND, STOP and so forth to the remote control input of the VCR 504.

A VCR interrupt control 508 holds an interrupt mask which is used to decide which of several error and status conditions from the VCR 504 will interrupt the processor via the IRQ line. The mask is set to the appropriate condition via a MASK DATA input from the processor interface 507, and the operation of the mask is enabled via the SET MASK input. On interrupt a flag is set in a status register in the processor interface 507 and is cleared when the microprocessor reads the status register. A CTL (control) pulse from the VCR 504 is used an an interrupt condition for counting stripes. The CTL pulse is produced by the rotation of the VCR head.

The operation control 506 is the heart of the READ/ WRITE queue system referred to above. The READ/WRITE requests from the microprocessor are combined with the CTL (control) pulse from the VCR 504 (the CTL pulse is used to synchronize reading and writing) and the FIELD pulse from the video timing 509 to generate all of the control and status signals for the processor interface 507. When a READ or WRITE request (READ FRAME REQ/WRITE FRAME REQUEST) is issued, the line WAIT goes high until the actual read or write is in progress. At this point the line WAIT goes low and the line BUSY goes high until the end of the read or write. If WAIT is low then, even though BUSY may be high, the next read or write operation may be started. If a READ or WRITE request issued while the WAIT line is still high the ERROR line goes high and that READ or WRITE request is not acted on. The ERROR line goes high if the read or write operation is faulty. Thus, the system can handle a queue of two requests, but not of three or more. The operation control 506 has an output for transmitting a READ/WRITE REQUEST signal to the buffer control 505 and an input for receiving a READ/WRITE INHIBIT signal from the buffer control 505. The signals control the BUFFER ACCEPT/BUFFER DEMAND connection between the buffer control 505 and the buffer store bus.

The two final components shown in Figure 6 are the READ/WRITE data formatting circuit 510 and the video timing 509. The circuit 510 is in two parts, namely a VCR Write Data Clock and VCR Read Data Synchronizer. The VCR Write Data Clock provides the basic synchronization with the VCR. In the VCR Write Data Clock a phase locked loop locks a phase lock signal PL generated by the video timing 509 to a line pulse generated by a counter (which forms part of the VCR Write Data Clock) which acts as a line counter. The VCR Write Data Clock transmits to the data coupler 502 clock signals, LOAD signals for loading a byte from the buffer store to the VCR, and STORE signals for sending a byte from the VCR to the buffer store. The basic data rate at which data is recorded by the VCR is about 3½ MHz. However, for reasons which will become apparent below the effective bit rate is about 7 MHz.

In handling data read from the VCR, the incoming data and synchronization signals from the data/sync separator 503 are clocked by a 56 MHz clock from the above-mentioned phase locked loop. The synchronization of data is set by the first transition of data in every video line. The 56 MHz clock is divided by eight to give a 7 MHz signal and then used to sample the incoming data at a point midway through each bit.

The sampled data then has to be re-synchonized to the write clock timing. The way in which this re-synchronization is carried out is shown by the state diagram which constitutes Figure 8. To understand Figure 8 it should first be appreciated that each byte of data read from the VCR consists of a start bit (0 or 1), followed by eight data bits, followed by a stop bit (1 or 0). The stop bit always differs from the start bit for reasons explained below with reference to Figure 7. The 56 MHz write clock cycles the re-synchronization circuit through a cycle which can normally be considered as consisting of the ten successive states A to K inclusive, the cycle starting with the start bit of each byte. By the time state K is reached the stop bit should have been received. If it has not the re-synchronization goes to state L, before state A, so increasing the number of states in the cycle to eleven. Assuming the synchronization is not too far out this should result in the stop bit being received in state L. The re-synchronization then goes to state A for the cycle to recommence. To consider another situation, if the stop bit arrives early, before state K is reached, there is provision to go directly from state I to state A, so reducing the number of states in the cycle to nine. For the case where the stop bit is very late the cycle A-K-L- M-A is followed (twelve states per cycle), and where the start bit is very early the cycle A-H-A is followed (eight states per cycle). To allow for the case where the synchronization is completely adrift, there is provision for executing the cycle C-K-L-M-C. Thus, in this case, where the stop bit has still not arrived by state M the re-synchronization deliberately throws itself out by jumping to C. It has been found from a computer simulation study that the procedure offered by Figure 8 is very effective in providing rapid re-synchronization.

The video timing 509, referred to above comprises a commercially available Teletext device (Model SAA 5020 of Mullard Limited) which generates the video synchronization signals and provides the pulse PL (LOCK REFERENCE) to lock the phase lock loop described above. The video timing 509 further comprises a line and frame counter. The Teletext device, in cooperation with the line and frame counter, provides pulses (FIELD DATA WINDOW) which define the active time of the frame for reading and writing.

The data from the buffer store is recorded by the VCR as a serial, non-return-to-zero, raised cosine signal with a base frequency, as mentioned above, of about $3\frac{1}{2}$MHz onto which is added line and frame synchronization. The recorded data is completely asynchronous and synchronization is achieved by start and stop bits appended to each byte of data. The asynchronous format gives freedom from phase errors. The use of an asynchronous non-return-to-zero form of data recording is a significant departure from known methods of video data recording. The significance of this aspect of the invention will now be explained further with reference to Figure 7a and 7b of the accompanying drawings. It should be understood that the signals shown in Figures 7a and 7b are idealised and that the actual signals would not have the sharp transitions shown, so as to avoid the high frequencies associated therewith. Figure 7a shows a signal recorded synchronously with a return to zero between each bit. Against the signal has been written the binary representation, 10110101, of the signal. The effective bit rate is $3\frac{1}{2}$ MHz. In contrast, Figure 7b shows the method according to this aspect of the present invention. Here the bits are recorded without any gaps between them so that the information is more densely packed. The start of each byte is represented by a start bit (in this case the start bit is a zero) and the end of each byte is represented by a stop bit (in this case the stop bit is a one). This ensures that there is always at least one transition in the signal level per byte, i.e. between each stop bit and the following start bit. If there were no start or stop bits a situation could arise where the data might consist, for example, of a very long succession of 1's. The circuitry detecting the data is provided with means for adjusting the detection level according to the long term average of the signal being received, and with the above-mentioned long succession of 1's this circuitry could begin to regard the data as representing not a succession of 1's but a continuous value of somewhere around ½. Minor fluctuations above that continuous value would then be regarded as 1's, and minor fluctuations below that continuous value would then be regarded as zeroes. The data would thus be erroneously detected. It should be mentioned that although Figure 7b shows the start bits as having a value 0 and the stop bits as having a value 1 the reverse could be true.

Each video line (64 microseconds) holds 36 bytes of data, so that in 300 active video lines a maximum of 10,800 bytes may be stored. Some of these bytes, say 800 bytes, can be used for system information and error correction codes, leaving the remaining bytes available for data.

CLAIMS:

0084950

1.   A method of recording data on a video tape recorder which comprises:

(a)   Feeding incoming data into a buffer store,

(b)   Transferring a file of data from the buffer store on to a stripe of a video tape mounted in the video recorder,

(c)   Repeating steps (a) and (b) until a block of files has been recorded on a plurality of stripes contained in a length of tape, adjacent recorded stripes being separated from one another by unrecorded stripes if the rate at which the data is fed to the store is less than the maximum rate at which data can be recorded,

(d)   Where steps (a) to (c) leave unrecorded stripes in the said length of tape, repeating steps (a) to (c) to record data on previously unrecorded stripes, and

(e)   Repeating steps (a) to (d) on successive lengths of tape.

2.   A method according to claim 1, wherein step (d) involves repeating steps (a) to (c) a sufficient number of times to record data on all or substantially all of the previously unrecorded stripes.

3.   A method according to claim 1 or 2, wherein the incoming data is provided by a computer on which it is initially held.

4.   A method according to any one of claims 1 to 3, wherein the data represents an image.

5.   A method according to claim 4, wherein the image is a satellite image.

6.    A method according to any preceding claim, wherein the data is recorded asynchronously, each byte being constituted by a succession of bits which follow one another  without any gaps therebetween, each byte having a start bit and a stop bit, the start and stop bits having different values to one another.

7.    A method according to claim 1, wherein the tape carries a track on which are recorded signals identifying the locations of the blocks of files, each such signal being a digit sequence which is combined with its mirror image to give a sequence which reads identically in either direction.

8.    An apparatus for recording data on a video tape recorder, which comprises:

    (a)   a data buffer store,

    (b)   means for feeding incoming data to the buffer store,

    (c)   means for successively transferring a plurality of files of data from the buffer store on to a corresponding plurality of stripes of the video tape, adjacent recorded stripes being separated from one another by unrecorded stripes if the rata at which data is fed to the store is less than the maximum rate at which data can be recorded, whereby a block of files is recorded, and

    (d)   means for indexing the video tape back to the first unrecorded stripe in the length of tape on which the said block of files is recorded, thereby to permit one or more further blocks of files to be recorded on said unrecorded stripes.

9.    An apparatus according to claim 8, comprising a video recorder interface for interfacing the video recorder with the remainder of the apparatus.

10. An apparatus according to claim 9, adapted to operate in conjunction with a host computer on which, in use, the data is initially held, further comprising a host interface for interfacing the host computer with the remainder of the apparatus.

11. An apparatus according to claim 9, adapted to store images received by a satellite receiving station, further comprising an interface for interfacing the satellite receiving station with the remainder of the apparatus.

12. An apparatus according to any one of claims 9 to 11, further comprising means for reading the data recorded on the video tape.

13. An apparatus according to claim 12, wherein reading means reads the data asynchronously and comprises means for synchronizing the data read from the tape to a clock.

14. An apparatus according to claim 13, wherein each byte of data has start and stop bits appended thereto, and wherein the synchronizing means comprises counting means adapted normally to cycle through a succession of states equal in number to the number of bits, including stop and start bits, in a single byte, thereby to clock to bits of a byte, the counting means being adapted to cycle through a greater or lesser number of states in the event that the stop bit arrives late or early respectively.

15. An apparatus according to claim 14, wherein the counting means has means for throwing its cycle out of synchronism in the event that the use of the greater or lesser number of cycle states fails to locate the stop bit.

16. An apparatus according to any one of claims 9 to 15, wherein the video recorder interface comprises an operation control circuit for controlling the operation of the said interface, the operation control circuit being provided with queuing means for enabling it to receive a second command while a first command is being acted on.

Fig.1

Fig. 2

0084950

Fig.3

3/11

0084950

MICROPROCESSOR    UNBUFFERED  BUS

**312** TIME TRACK ENCODER/ DECODER

ADDRESS, DATA

ENABLE

TO VCR 504

**310** RS 232 INTERFACE

ADDRESS, DATA

ENABLE

TO VDU TERMINAL 311

ADDRESS        RAM

TIME ENG

RS232

ENB

FDC 2

FDC 1

BUFFER PAGE

ADDRESS DECODER

READ/WRITE BUFFER

**306**

BUFFERED PROCESSOR BUS

MRDY

READ/WRITE BUFFER

BUFFER ACCESS CONTROL

**307**

DEMAND/ACCEPT

DATA

**308**

BUFFER ACCESS DATA BUFFER

LOAD/READ DATA

DATA

BUFFER STORE BUS

## Fig. 4A

0084950

4/11

MICROPROCESSOR   UNBUFFERED   BUS

ADDRESS, DATA

CHIP SELECTS
ENABLE                    304

MEMORY
(RAM/PROM)

RE,WE

ADDRESS, DATA                                    301

MICROPROCESSOR

BUFFERED          E,Q
DATA

302

E,Q

RE,WE
ADDRESS STEADY
MRDY
ROM
FDC 2

PROCESSOR
TIMING

MICROPROCESSOR   BUFFERED   BUS

PAGE DATA

LOAD/READ
PAGE

BUFFER ACCESS
PAGE REGISTER

ENABLE
ADDRESS                   305

ADDRESS

ADDRESS,DATA

FDC1                RE,WE

FLOPPY DISC
CONTROLLER

TO FLOPPY DISC
DRIVE 309

303

BUFFER STORE BUS

Fig.4B

Fig.5A

Fig.5B

MICROPROCESSOR BUFFERED BUS

DATA

READ PAGE
WRITE PAGE

A0, A1          DATA
ENB, R/W

501

PAGE
REGISTER

PROCESSOR
INTERFACE

READ WAIT/BUSY/ERROR
WRITE WAIT/BUSY/ERROR

507

CLEAR

FLAG

ADDRESS ENABLE          ADDRESS ENABLE

INC COUNT

BUFFER
CONTROL

ADDRESS LO/HI    EOB

FIELD

COUNT        READ/WRITE
ENABLE       REQUEST

505

BUFFER DEMAND
BUFFER ACCEPT

BUFFER STORE BUS

Fig.6A

MICROPROCESSOR BUFFERED BUS

508

**INTERRUPT CONTROL**

IRQ

CLEAR FLAG (READ STATUS)

SET MASK

MASK DATA

READ WAIT/BUSY/ERROR
WRITE WAIT/BUSY/ERROR

FLAG     CTL

510

**READ/WRITE DATA FORMATING CIRCUIT**

READ SERIAL DATA

SYNC

DATA

FIELD
FIELD DATA WINDOW
ODD FIELD
LOCK REFERENCE

READ WAIT/BUSY/ERROR
WRITE WAIT/BUSY/ERROR

506

**OPERATION CONTROL**

READ FRAME REQ
WRITE FRAME REQ

READ/WRITE INHIBIT

FIELD
ODD FIELD

EOB

CTL

509

**VIDEO TIMING**

SYNC
SYNC

FIELD
ODD FIELD

FIELD

BUFFER STORE BUS

**Fig.6B**

Fig.6C

0084950

Fig. 7a

Fig. 7b

Fig.8